# EUROPEAN PATENT SPECIFICATION

(11) **EP 4 644 231 B1**
(45) Date of publication and mention of the grant of the patent: **19.08.2026**
(21) Application number: 24173925.9
(22) Date of filing: 02.05.2024
(51) Int. Cl.: B64C 1/12, B64C 3/20, B64C 3/26, B64D 33/08, F28D 9/00, F28F 3/02, F28F 7/02

(54) **AIRCRAFT STRUCTURAL COMPONENT WITH A FOLDCORE SANDWICH ELEMENT CONFIGURED AS A HEAT EXCHANGER**
FLUGZEUGSTRUKTURBAUTEIL MIT EINEM ALS WÄRMETAUSCHER AUSGEBILDETEN FALTKERN-SANDWICHELEMENT
COMPOSANT STRUCTUREL D'AÉRONEF AVEC UN ÉLÉMENT SANDWICH À ÂME PLIABLE CONÇU COMME UN ÉCHANGEUR DE CHALEUR

(43) Date of publication of application: 05.11.2025
(73) Proprietor: Airbus (S.A.S.), 31700 Blagnac (FR)
(72) Inventor: METZNER, Christian, 82024 Taufkirchen (DE); ZIMMERMANN, Kristian, 21129 Hamburg (DE); BEIER, Uwe, 82024 Taufkirchen (DE)
(74) Representative: KASTEL Patentanwälte PartG mbB

(56) References cited:
- EP-A2- 0 448 991
- US-A- 5 028 474
- US-A1- 2014 349 082
- US-A1- 2016 223 273
- US-A1- 2019 145 348
- US-A1- 2021 098 810
- FISCHER S ET AL: "Mechanical tests for foldcore base material properties", COMPOSITES PART A, ELSEVIER, AMSTERDAM, NL, vol. 40, no. 12, 1 December 2009 (2009-12-01), pages 1941 - 1952, XP026769745, ISSN: 1359-835X, [retrieved on 20090327], DOI: 10.1016/J.COMPOSITESA.2009.03.005
- KLETT YVES ET AL: "Potential of origami-based shell elements as next-generation envelope components", 2017 IEEE INTERNATIONAL CONFERENCE ON ADVANCED INTELLIGENT MECHATRONICS (AIM), IEEE, 3 July 2017 (2017-07-03), pages 916 - 920, XP033144435, ISBN: 978-1-5090-5998-0, [retrieved on 20170821], DOI: 10.1109/AIM.2017.8014135
- SINGH PRABHJOT ET AL: "Metal-faced sandwich composite panels: A review", THIN-WALLED STRUCTURES, ELSEVIER, AMSTERDAM, NL, vol. 195, 17 November 2023 (2023-11-17), XP087450981, ISSN: 0263-8231, [retrieved on 20231117], DOI: 10.1016/J.TWS.2023.111376
- HEIMBS S ET AL: "Sandwich structures with textile-reinforced composite foldcores under impact loads", COMPOSITE STRUCTURES, ELSEVIER SCIENCE LTD, GB, vol. 92, no. 6, 1 May 2010 (2010-05-01), pages 1485 - 1497, XP026882859, ISSN: 0263-8223, [retrieved on 20091110], DOI: 10.1016/J.COMPSTRUCT.2009.11.001
- HEIMBS ET AL: "Virtual testing of sandwich core structures using dynamic finite element simulations", COMPUTATIONAL MATERIALS SCIENCE, ELSEVIER, AMSTERDAM, NL, vol. 45, no. 2, 1 April 2009 (2009-04-01), pages 205 - 216, XP025974975, ISSN: 0927-0256, [retrieved on 20081023], DOI: 10.1016/J.COMMATSCI.2008.09.017
- HEIMBS S ET AL: "Experimental and Numerical Analysis of Composite Folded Sandwich Core Structures Under Compression", APPLIED COMPOSITE MATERIALS, KLUWER ACADEMIC PUBLISHERS, DO, vol. 14, no. 5-6, 15 February 2008 (2008-02-15), pages 363 - 377, XP019568846, ISSN: 1573-4897

## Description

The invention relates to an aircraft structural component comprising a load bearing sandwich element. Further, the invention relates to an aircraft equipped therewith and to a manufacturing method.

For technical background, reference is made to the following literature:
[1] US 2009/0022959 A1
[2] US 3 086 899 A
[3] US 11 060 480 B2
[4] US 5 894 046 A
[5] US 5 792 539 A
[6] US 2014/0 349 082 A1
[7] CN 113997647 A
[8] US 11 462 763 B2
[9] US 5 028 474 A
[10] FISCHER S ET AL: "Mechanical tests for foldcore base material properties", COMPOSITES PART A, ELSEVIER, AMSTERDAM, NL, vol. 40, no. 12, 1 December 2009 (2009-12-01), pages 1941-1952, XP0267697 45, ISSN: 1359-835X, DOI: 10.1016/J.COMPOSITESA.2009.03.005 [retrieved on 2009-03-27]
[11] KLETT YVES ET AL: "Potential of origami-based shell elements as next generation envelope components", 2017 IEEE INTERNATIONAL CONFERENCE ON ADVANCED INTELLIGENT MECHATRONICS (AIM), IEEE, 3 July 2017 (2017-07-03), pages 916-920, XP033144435, DOI: 10.1109/AIM.2017.8014135 ISBN: 978-1-5090-5998-0 [retrieved on 2017-08-21]
[12] US 2014/349082 A1
[13] SINGH PRABHJOT ET AL: "Metal-faced sandwich composite panels: A review", THIN-WALLED STRUCTURES, ELSEVIER, AMSTERDAM, NL, vol. 195, 17 November 2023 (2023-11-17), XP087450981, ISSN: 0263-8231, DOI: 10.1016/J.TWS.2023.111376 [retrieved on 2023-11-17]
[14] US 2021/098810 A1
[15] HEIMBS SET AL: "Sandwich structures with textile-reinforced composite foldcores under impact loads", COMPOSITE STRUCTURES, ELSEVIER SCIENCE LTD, GB, vol. 92, no. 6, 1 May 2010 (2010-05-01), pages 1485-1497, XP026882859, ISSN: 0263-8223, DOI: 10.1016/J.COMPSTRUCT.2009.11.001 [retrieved on 2009-11-1 O]
[16] HEIMBS ET AL: "Virtual testing of sandwich core structures using dynamic finite element simulations", COMPUTATIONAL MATERIALS SCIENCE, ELSEVIER, AMSTERDAM, NL, vol. 45, no. 2, 1 April 2009 (2009-04-01), pages 205-216, XP025974975, ISSN: 0927-0256, DOI: 10.1016/J.COMMATSCI.2008.09.017 [retrieved on 2008-10-23]
[17] HEIMBS SET AL: "Experimental and Numerical Analysis of Composite Folded Sandwich Core Structures Under Compression", APPLIED COMPOSITE MATERIALS, KLUWER ACADEMIC PUBLISHERS, DO, vol. 14, no. 5-6, 15 February 2008 (2008-02-15), pages 363-377, XP019568846, ISSN: 1573-4897
[18] US 2019/145348 A1
[19] US 2016/223273 A1
[20] EP 0 448 991 A2

Reference [1] describes a wall element comprising two outer layers extending at least substantially parallel to each other, between which at least two intermediate layers are provided, wherein each intermediate layer extends between the outer layers in a zigzag fashion. Reference [2] describes about lamina for the construction of composite, laminar, cellular wall structures and like partitions. Reference [3] describes about sound-attenuating heat exchangers with an aerodynamically shaped layer. Reference [4] describes about double-ply corrugated paperboard for packing goods. Reference [5] describes about multilayer thermal insulation barrier which supports the outer skin of an evacuated or vacuum panel. Reference [6] describes about fold core panel (multi-layered) having peaks valleys characterized by a corrugated zigzag pattern. The fold core may include an airflow channel. Reference [7] describes about composite heat-conducting shielding material, a preparation method and electronic equipment. Reference [8] discloses an electrically driven aircraft with multiple fuel cells and a cooling system including a heat exchanger. One of the main challenges of electric flying based on PEM Fuel Cells are the required bulky and heavy heat exchanger (HX). Prior art heat exchangers are mostly made from metals such as aluminium. An object of the invention is to provide an improved heat exchanging function onboard of an aircraft.

For achieving such object, the invention provides an aircraft structure component according to claim 1. An aircraft equipped therewith is provided by claim 10 and a manufacturing method is provided by claim 12.

Advantageous embodiments are subject-matters of the dependent claims.

The invention provides according to a first aspect thereof an aircraft structural component comprising a load bearing foldcore sandwich element, wherein the foldcore sandwich element comprises a foldcore fixed between a first and second plate and is configured as a heat exchanger including a first fluid conduct for conducting a first fluid through the sandwich element and a second fluid conduct for conducting a second fluid through the sandwich element, wherein the foldcore is comprised of a flat base material folded at first meandering fold lines and second meandering fold lines, the first fold lines crossing the second fold lines, wherein at least the first fluid conduct comprises meandering channels defined by the fold core.

In some embodiments, the foldcore or the whole foldcore sandwich element is made of a fibre reinforced composite material.

The invention provides a functional integration approach, namely a structural loaded sandwich like heat exchanger. In other words, the heat exchanger is part of a structural component of the aircraft which bears a structural load. According to the invention a foldcore sandwich element bearing structural loads is configured as a heat exchanger. By using a foldcore sandwich element, a good load bearing capability and a heat exchanging capability is achieved.

In some embodiments, the aircraft structural component is a high performance structural loaded element made from a fibre reinforced composite material, especially CFRP, realized as sandwich element. In preferred embodiments, a sandwich CFRP element is configured such that it realizes a heat exchanging (HX) function. In some embodiments, the foldcore is made from different materials as the plates. E.g. the foldcore can be a folded metal sheet which is sandwiched between composite plates.

Without modification classic CFRP sandwiches as used in aerospace made from foam or honeycomb (HC) cores are not suitable to offer HX function, as the prerequisite for air-liquid cooling systems are two separable cavities that enable flow through is not fulfilled. Other HX configurations are not be optimized for load bearing functions. Embodiments of the invention integrate the functionalities of load bearing and HX function while saving material and weight.

A foldcore is an origami-like structural sandwich core, which has several fold lines where a flat or planar base material is folded into a three-dimensional structure. Some foldcores may be manufactured by folding the planar base material into the three-dimensional structure. Also, other manufacturing methods for the foldcores are possible. E.g. when the foldcores are made from metal materials, cold or warm metal working methods such as peening, whetting, forging, casting are possible. Foldcores made from fibre-reinforced composite material may also be manufactured by usual manufacturing methods for structured fibre reinforced composite components using a mould or moulding tool with the corresponding three-dimensional structure for forming the composite material into the origami-like three-dimensional form with fold lines.

In the embodiments of the invention, the foldcore has first meandering fold lines and second meandering fold lines. Especially, the first fold lines cross the second foldlines. In some embodiments, the first fold lines are essential parallel (i.e. at least with their main directional component parallel) to each other; and the second foldlines are essential parallel (i.e. at least with their main directional component parallel) to each other. Especially, the first fold lines are essentially directed along the main channels designed by the foldcore, while the second fold lines are essentially perpendicular to the main channels designed by the foldcore. Especially, the foldcore has ribs and valleys, wherein the first fold lines run along or form the peak of the ribs and the bottom of the valley, while the second fold lines cross the ribs and valleys and change the direction thereof, so that the ribs and valleys have a zigzag course.

In some embodiments, the angle with which the base material is folded at the first foldlines is in a range of 10°-170°, preferably 20°-160°, and most preferred between 30°-95°. In some embodiments, the angle with which the base material is folded at the second foldlines is in a range of 10°-170°, preferably 20°-160°, and most preferred 85°-140°.

Foldcore sandwich elements can be used as alternatives to HC for load bearing functions with the benefit of flow through cavities.

Heat exchangers are devices configured to exchange thermal energy, or heat, between a first fluid stream and a second fluid stream while maintaining fluid isolation between the two fluid streams. Often, the first fluid is a readily available fluid, such as air, and the second fluid is a working fluid or heat exchange fluid that flows within a closed loop and is utilized, for example, to cool a cooled component. Examples of work fluids or heat exchange fluids include water, aqueous solutions, oil, hydrocarbon fluids, fluorocarbon fluids, and/or refrigerants.

In some embodiments, the foldcore sandwich element comprises a first foldcore and a second foldcore. In some embodiments, the first and second foldcore are oriented essentially parallel to each other, i.e. with at least their main direction component parallel to each other. In some embodiments, the first and second foldcore are stacked into each other to define therebetween channels for the first and/or second fluids. In some embodiments, the first and second foldcores are offset from each other, e.g. in different levels of the sandwich element, e.g. with an intermediate plate therebetween. In this configuration, the first and second foldcores can be essentially parallel to each other (i.e. directed with their main direction component parallel to each other) or can be essentially perpendicular to each other (i.e. directed with their main direction component perpendicular to each other). In this configuration, through channels between the first foldcore and the plates adjacent to the first foldcore can form first channels of the first fluid conduit, while through channels between the second foldcore and the plates adjacent to the second foldcore can form second channels of the second fluid conduit.

In some embodiments, the second channels are channels for working fluids, especially a working liquid such as water. In some embodiments, the cross-section of the second channels is smaller than the cross-section of the first channels. In some embodiments, the distance between plates adjacent to the second foldcore is smaller than the distance between plates adjacent to the first foldcore.

In preferred embodiments, the first conduit comprises first channels running (e.g., in a zigzag course) through the foldcore sandwich element and the second conduit comprises second channels running (e.g., in a zigzag course) through the foldcore sandwich element.

In some embodiments, at least some the first and second channels run with their main direction component parallel to each other.

In some embodiments, at least some of the first and second channels run with their main direction component perpendicular to each other.

In some embodiments, at least some of the second channels are defined between a first foldcore and a second foldcore stacked into each other.

In some embodiments, at least some of the first and second channels are separated from each other by an intermediate plate of the foldcore sandwich element.

According to the invention, at least some of the second channels are defined by an indentation in peak regions or valley regions of the foldcore.

In some embodiments, each foldcore has ribs and valleys that run, in zigzag course, through the sandwich element. In some embodiments, at least one of the first and second fluids is in contact with a surface of the ribs and valleys. In some embodiments, the first fluid, such as air, is flowing in the first channels arranged between the ribs or valleys and an adjacent plate of the sandwich element. In some embodiment, the second channels are arranged inside the ribs in a peak region thereof and/or in a bottom region of the valleys.

In some embodiments, the base material and/or the material of the first and/or second plate is a metal, a ceramic or a fibre reinforced composite material or combinations thereof. The fibre reinforced composite material is preferably chosen from the group consisting of CFRP, CFRP hybrid material, CFRP and metal hybrid material, CFRP post reinforced material, fibre reinforced composite material with metallized fibres, fibre reinforced composite material with pitch fibres, fibre reinforced composite material with metal fibres, fibre reinforced composite material with graphene, fibre reinforced composite material with graphite, SiC composite material, fibre reinforced composite material with metal components, fibre reinforced composite material with metallized surface, fibre reinforced composite material with a pyrolytic graphite sheet, and fibre reinforced composite material with a thermally conductive graphite sheet (e.g. Panasonic Thermal Graphite Sheets (PGS), offered on the market by the company Panasonic).

In some embodiments, at least a part of the foldcore and/or the first and/or second plate and/or an intermediate plate of the foldcore sandwich element is configured as a separation wall between the first and second fluid conduits and comprises at least one of a metal, graphite, graphene, and PGS. In some embodiments, the metal, graphite, graphen and/or PGS is integrated in a fibre reinforced composite material used as main component of the base material or in porous cavities therein.

In some embodiments, the second channels of the second fluid conduit include 3D-printed channels and/or metal channels combined within the foldcore. In some embodiments, these channels are arranged in (a limited region in) the peak parts of the ribs and/or in (a limited region in) the bottom parts of the valleys. Especially, the second channels run along the rib peaks and valley bottoms, respectively.

In some embodiments, first channels of the first conduit are defined between ribs of the foldcore and second channels of the second conduit running with a main direction component in parallel to the first channels are arranged in peak portions of the ribs of the foldcore and/or in bottom parts of valleys of the foldcore.

In some embodiments, contact points or contact regions between the foldcore and the first and/or the second plates comprise a strong interconnection. In some embodiments, the connections are welded, bonded or soldered. In some embodiments, a fibre reinforced composite base material of the foldcore is connected at contact points or contact regions comprising at least one of an adhesive, broken fibres, treated surfaces, roughened surfaces and surfaces grinded to the fibres.

The aircraft structure component can be any load bearing part of an aircraft structure. Examples are fuselage components, wing components, tail components, posts, struts, stringers, wall components, floor components, support components.

In embodiments of the invention, at least a part of the foldcore and/or of the first and/or second plates or of an intermediate plate acts as a separation wall between the first fluid and the second fluid through which the thermal energy or heat is exchanged. In some embodiments, the foldcore and/or the plate is based on a fibre reinforced composite material, especially CFRP (carbon fibre reinforced plastic). In some embodiments, the composite material is improved for a better thermal conductivity. Especially, at least the part of the foldcore sandwich element which acts as separation wall for heat exchange includes a thermal interface material. In some embodiments, the thermal interface material reduces thermal resistance between solid surfaces by filling microscopic air gaps, irregularities, and imperfections with a high conductivity material. For example, the surfaces of a CFRP element are not perfectly smooth. Surface irregularities creates air pockets, which are good thermal insulators and impede thermal conductivity. A thermal interface material improves thermal conductivity by filling gaps to eliminate air pockets.

According to another aspect, the invention provides an aircraft comprising a structural component according to any of the aforementioned embodiments.

In some embodiments, the aircraft further comprises at least one fuel cell arranged and configured to be cooled by means of the heat exchanger constituted by the foldcore sandwich element of the aircraft structure component according to any of the aforementioned embodiments.

According to another aspect, the invention provides a method for manufacturing a foldcore sandwich element for the aircraft structural component according to any of the aforementioned embodiments, the method comprising:
a) providing a foldcore for defining through channels for conducting a fluid such that the foldcore has fold lines where a flat base material is folded into a three-dimensional structure, wherein the fold lines include first meandering fold lines and second meandering fold lines, the first fold lines crossing the second fold lines, and
b) arranging the foldcore between first and second plates made and fixing the plates to the foldcore.

According to the invention, step a) comprises:
a1) providing second through channels for conducting a second fluid by indentations in peak regions or valley regions of the foldcore.

In some embodiments, the foldcore is provided by folding a planar base material into the three-dimensional structure. In other embodiments, the three-dimensional structure with fold lines is provided by using a mould or by other forming techniques. When the foldcore is made from sheet metal, a folding of the same is preferred, but also other cold or warm metal forming techniques including forging, beating, whetting, casting is possible.

In some embodiments, step a) comprises:
a2) providing a first foldcore and a second foldcore.

In some embodiments, step a) comprises:
a3) stacking a first and a second foldcore together so that second channels for conducting a second fluid are defined between the first and second foldcore.

In some embodiments, step a) comprises:
a4) providing separate second channels within ribs of the foldcore.

In some embodiments, step a) comprises:
a5) choosing the base material and/or the material of at least one or both of the first and second plates from the group consisting of fibre reinforced composite material, metal, pure metal, metal alloy, aluminium including an aluminium alloy, titanium, ceramic, CFRP, CFRP hybrid material, CFRP and metal hybrid material, CFRP post reinforced material, fibre reinforced composite material with metallized fibres, fibre reinforced composite material with pitch fibres, fibre reinforced composite material with metal fibres, fibre reinforced composite material with graphene, fibre reinforced composite material with graphite, SiC composite material, fibre reinforced composite material with metal components, fibre reinforced composite material with metallized surface, fibre reinforced composite material with a pyrolytic graphite sheet (PGS), fibre reinforced composite material with a thermally conductive graphite sheet, and combinations of one or several of the aforementioned materials, especially in layers, as composite or hybrid material.

In some embodiments, step a) comprises:
a6) applying a material with a higher thermal conductivity as the base material (e.g. a fibre reinforced composite material) on the surface of the base material or on the surface of the foldcore.

In some embodiments, step a) comprises:
a7) filling porous cavities of the fibre reinforced material with a material with a higher thermal conductivity.

In some embodiments, step b) comprises:
b1) repeating step a) in order to provide first and second foldcores and arranging the first and second foldcores with an intermediate plate therebetween.

In some embodiments, step b) comprises:
b2) roughening or grinding contact points or contact regions between the foldcore and the first and/or second plate.

In some embodiments, step b) comprises:
b3) fixing the foldcore by an adhesive.

In some embodiments, step b) comprises:
b4) repeating step a) in order to provide first and second foldcores and arranging the first and second foldcores with an intermediate plate therebetween so that channels defined by the first and second foldcores run with main direction components perpendicular to each other.

In some embodiments, the foldcore sandwich element of the aircraft structural component is configured as a heat exchanger in a cross-flow configuration. The sandwich element especially has several levels or layers of foldcores with an intermediate plate therebetween wherein the foldcores are oriented such that the channels defined thereby are crossing each other when seen from above. The configuration maybe similar to a conventional plate-fin type heat exchanger in crossflow configuration wherein instead of fins foldcores with a high load bearing capility are used. In some embodiments, the base material and optionally the material of the plates therebetween is a fibre reinforced composite material, especially CFRP. In some embodiments, the sandwich element with several foldcores one above the other is part of a structural component of an aircraft.

In some embodiments, the first and second through channels within the foldcore sandwich element are arranged parallel to each other, i.e. for a flow of the first and second fluid in essentially parallel direction or counter-parallel directions. In these embodiments, the foldcore sandwich element is configured as a counter or parallel flow HX. In some embodiments, a first foldcore and a second foldcore are stapled, thereby forming a channel cavity for the liquid side. Alternatively, indented foldcores can be used.

Further material adaptations are thinkable e.g. integration of highly thermal conductive materials like PGS (Panasonic Thermal Graphite Sheets) into the foldcore or porous cavities which act like a heat pipe to further increase the thermal power and efficiency. Other material combinations like CFRP/metal hybrids or also pure metal concepts e.g. based on 3d printed water channels combined with foldcores are feasible.

Preferred embodiments of the invention relate to structural heat exchangers based on adapted foldcores, especially metal or composite foldcores.

In preferred embodiments sandwich elements with an adapted foldcore design enable structural as well as aerothermal performance with potential improvements for weight and drag reductions. Preferred uses of the structural foldcore sandwich elements with heat exchange function is in cooling system for aircrafts, especially for cooling electrical components, especially of an electrical propulsion system, such as fuel cells, batteries, electric motors, power electronics.

Preferred embodiments of the invention relate to load bearing sandwich elements made from folded cores arranged to serve as a heat exchanger (HX).

In some embodiments, the foldcore sandwich element is configured as a 0/90 or crossflow HX.

In some embodiments, the foldcore sandwich element is configured as a parallel (including counter-parallel) HX.

In some embodiments, the foldcore sandwich element has HX related optimized foldcore geometries.

In some embodiments, the sandwich element configured as HX is made from CFRP hybrid or post reinforced materials.

In some embodiments, the foldcore sandwich element configured as HX is made from modified materials (pitch, metalized fibres, graphene, graphite,... - SiC, metal composites or pure metals) that have a higher thermal conductivity.

In some embodiments, the foldcore sandwich element configured as HX has surface modifications such as PGS.

In some embodiments, the foldcore sandwich element configured as HX has a modified fibre architecture to enhance thermal conductivity (3D-woven,...).

In some embodiments, the foldcore sandwich element configured as HX has optimized contact points (optimized adhesives, broken fibres, surface prep (grind to fibre)).

In some embodiments the foldcore sandwich element configured as HX are manufactured with a method including a process to make foldcores tight (metallized).

In some embodiments, the foldcore sandwich element configured as HX include at least one titanium trapeze as liquid channel.

Embodiments of the invention are explained below referring to the accompanying drawings in which:
- Fig. 1: is a perspective view of an aircraft with a cooling system;
- Fig. 2: is a photograph of a foldcore to be used in a foldcore sandwich element according to a comparative example for providing a structural component of the aircraft combining load bearing function with the function of a heat exchanger for the cooling system;
- Fig. 3: is a perspective view, partly cut away, of an embodiment of the aircraft structural component with the foldcore sandwich element acting as heat exchanger according to a comparative example;
- Fig. 4: is a sectional view of the foldcore sandwich element of a further according to a further comparative example;
- Fig. 5: is a photograph of a foldcore for the foldcore sandwich element according to an embodiment of the invention;
- Fig. 6: is a sectional view of a foldcore for the foldcore sandwich element according to a further comparative example; and
- Fig. 7: is a sectional view of a foldcore for the foldcore sandwich element according to a further comparative example.

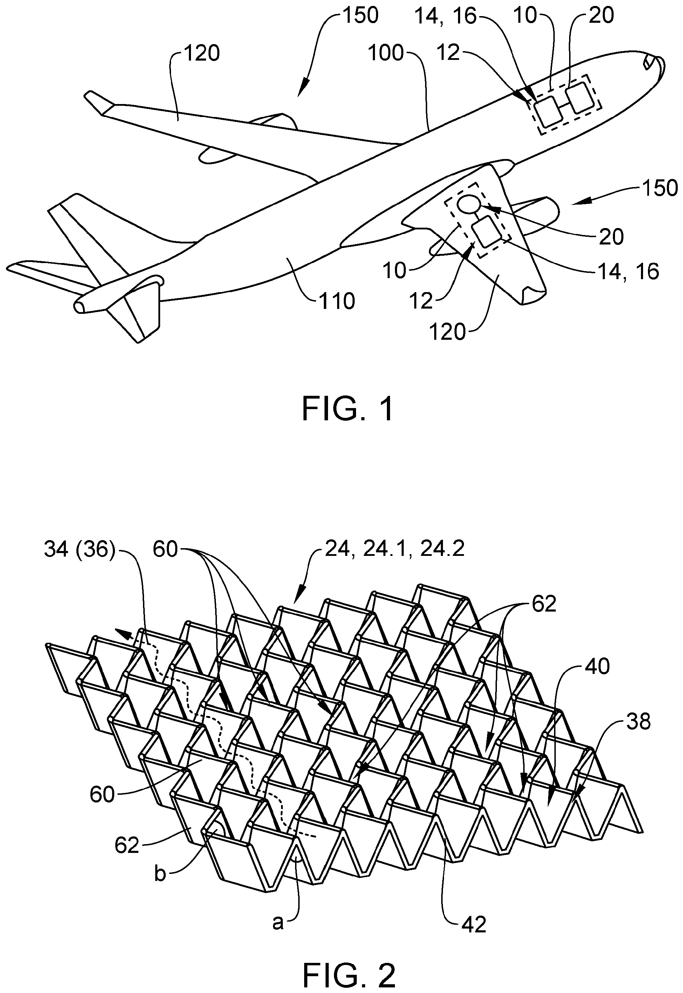

FIG. 1 is a perspective view of an aircraft 100 which has a fuselage 110 on each side of which a wing 120 is attached. Attached beneath each wing 120 is at least one propulsion system 150. In FIG. 1, the propulsion systems 150 are placed beneath the wing 120, but in another embodiment, they may be on top of the wing 120. The aircraft 100 comprises at least one electrical system 10, comprising at least one electrical component 20 such as a fuel cell (especially a PEM fuel cell), a battery, and/or a power electronic and a cooling system 12 for cooling the electrical component 20. In some embodiments, this system 10 is used to supply electricity to an aircraft propulsion system 150. In some embodiments, the system 10 is used to electrically power non-propulsive systems of the aircraft 100 (for example: computers, actuators, electrical converters, etc.).

Further, the aircraft 100 comprises an aircraft structural component 14, which may be a fuselage component, wing component, tail component, a post, a stringer or other reinforcement structure, a wall component, a floor component, or a support component, or any other load bearing component. The aircraft structural component 14 provides both load bearing function and heat exchanger function and is configured as a heat exchanger 16 of the cooling system 12.

As explained below with reference to the remaining figures, the aircraft structural component 14 comprises a load bearing foldcore sandwich element 22. In some embodiments, the foldcore sandwich element 22 is made of a fibre reinforced composite material. The foldcore sandwich element 22 comprises a foldcore 24, e.g. of fibre reinforced composite material, fixed between a first plate 26 and second plate 28. The foldcore sandwich element 22 is configured to function as the heat exchanger 16 and includes a first fluid conduct 30 for conducting a first fluid through the sandwich element 22 and a second fluid conduct 32 for conducting a second fluid through the sandwich element 22. At least the first fluid conduct 30 comprises channels - first channels 34 - defined by the foldcore 24.

Fig. 2 shows a perspective view of the foldcore 24 according to a comparative example which is provided for explanatory purposes only. The foldcore 24 is an origami-like structural sandwich core, which has folding lines 60, 62 where a flat base material 42 is folded into a three-dimensional structure including ribs 38 and valleys 40 running in a zig-zag course. In the cavities between the ribs 38 or valleys 40 and the surroundings, i.e. especially the adjacent plates 26, 28 through channels - e.g. the first channels 34 - are defined for conducting a fluid through the sandwich element 22.

Referring to Fig. 2, the foldcore is comprised of a flat base material 42 folded at first meandering fold lines 60 and second meandering fold lines 62. The first fold lines 60 cross the second fold lines 62. Thus, the foldcore 42 defines meandering channels 34. While a CFRP foldcore is shown in Fig. 2, the foldcore 42 can be made from different materials including metals or ceramics or hybrid materials.

In the comparative example of Fig. 2, the first fold lines 60 are essential parallel (i.e. at least with their main directional component parallel) to each other. Also, the second foldlines 62 are essential parallel (i.e. at least with their main directional component parallel) to each other. Especially, the first fold lines 60 are essentially directed along the main channels 34 designed by the foldcore, while the second fold lines 62 are essentially perpendicular to these main channels 34.

In some embodiments, the angle a with which the base material is folded at the first fold lines 60 is in a range of 10°-170°, preferably 20°-160°, and most preferred between 30°-95°. In some embodiments, the angel b with which the base material is folded at the second fold lines 62 is in a range of 10°-170°, preferably 20°-160°, and most preferred 85°-140°.

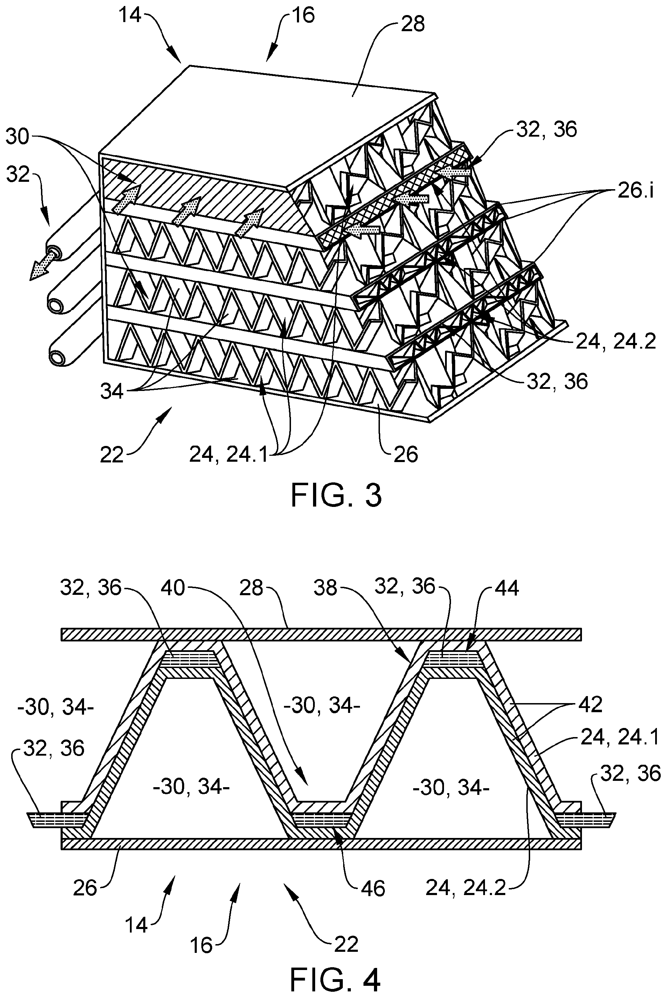

Fig. 3 shows a perspective view of an exemplary embodiment of the foldcore sandwich element 22 configured as a crossflow heat exchanger 16. The sandwich element 22 of this embodiment includes several first foldcores 24.1 and second foldcores 24.2 arranged alternatively one above the other with intermediate plates 26. i therebetween.

The first foldcores 24.1 define the meandering first channels 34 for conducting a first fluid such as air, while the second foldcores 24.2 define second channels 36 (preferably also meandering) for conducting a second fluid such as a working liquid, especially water, running in a closed loop through the cooling system 12.

The cross-section of the first channels 34 is essentially larger than the cross section of the second channels 36.

In the embodiment shown in Fig. 3, the first and second channels 34, 36 run essentially in directions that cross each other when seen from above.

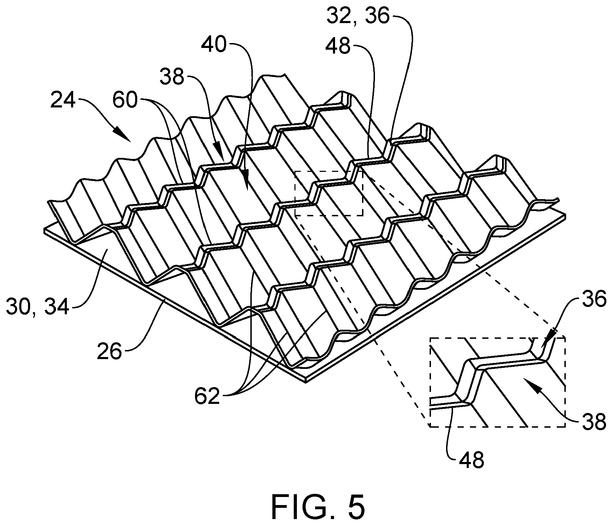

Fig. 4 is a sectional view through (a portion of) the foldcore sandwich element 22 of the aircraft structural component 14 according to another embodiment, wherein the foldcore sandwich element 22 is configured as counter flow or parallel flow heat exchanger 16. In the embodiment shown, the first and second foldcores 24.1, 24.2 are stacked into each other. While the rib and valley walls of the first and second foldcores contact each other, the second channels 36 are formed in peak regions 44 and bottom regions 46 between the first and second foldcores 24.1, 24.2. In some embodiments, the second channels 36 are directly defined between the peaks of the ribs 38 and between the bottoms of the valley 40 of the foldcores 24.1, 24.2. As indicated by dash-dotted lines in Fig. 4, the second channels may also be provided with channel walls, especially from thermally conductive material such as metal, integrated by any suitable technic such as 3-D-printing in the foldcore(s) 24, 24.1, 24.2. Fig. 5 shows a photograph of the foldcore 24 and the first plate 26 of the foldcore

sandwich element 22 of the aircraft structural component 14 according to the invention. The contact regions for contacting the adjacent plates 26, 28, e.g., the peaks of the ribs 38 on both sides of the foldcore 24 have an indentation 48 defining the second channels 36 for the working liquid. In some embodiments, the base material 42 is mainly a metal, especially aluminium (alloy) and/or titanium or a fibre-reinforced composite material, especially CFRP. In some embodiments, the sandwich element 22 is made from modified (e.g., fibre reinforced) composite materials (pitch, metalized fibres, graphene, graphite - SiC, metal composites or pure metals) that have a higher thermal conductivity.

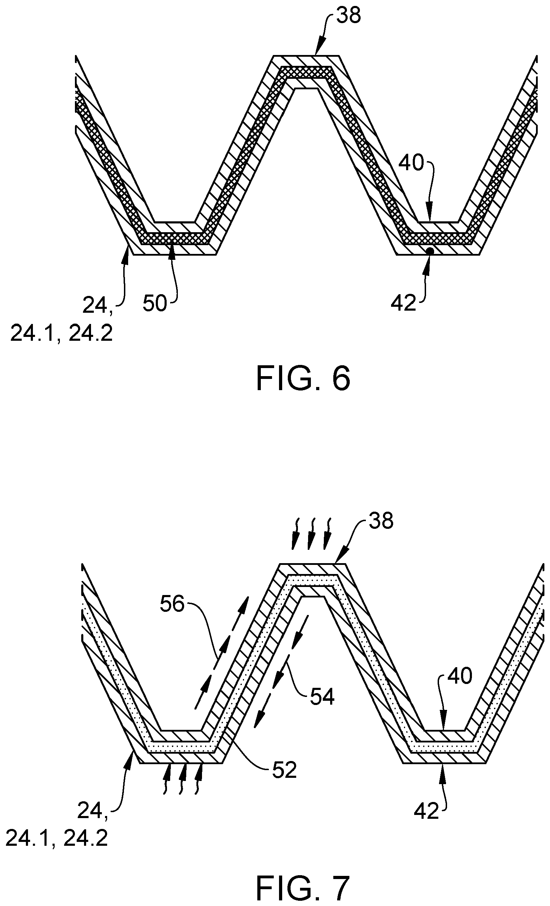

Further material adaptations are thinkable e.g. integration of highly thermal conductive materials like PGS (Panasonic Thermal Graphite Sheets) into the foldcore (see Fig. 6) or porous cavities which act like a heat pipe to further increase the thermal power and efficiency (see Fig. 7). Other material combinations like CFRP/metal hybrids or also pure metal concepts e.g. based on 3d printed water channels combined with foldcores 24 are feasible.

Fig. 6 shows a sectional view through the foldcore 24 of the foldcore sandwich element 22 of another comparative example of the aircraft structural component 14, wherein the base material 42 includes a layer of thermally conductive material such as a graphite sheet, e.g., PGS.

Fig. 7 shows a sectional view through the foldcore 24 of the foldcore sandwich element 22 of another comparative example of the aircraft structural component 14, wherein the base material 42 includes porous cavities 52 which act like a heat pipe. In Fig. 7, an example is shown where a higher temperature is present at the lower part of the figure, and a higher temperature is present at the upper part of the figure. Further arrows indicate a stream of cool medium 54 and a stream of hot medium 56 within the heat pipe.

In some embodiments, the contact points or regions between the foldcore 24 and the adjacent plates 26, 26.i, 28 are optimized in order to enhance the load bearing function. Optimizations include optimized adhesives, broken fibres, surface prep (grind to fibre).

Some embodiments include a modified fibre architecture to enhance thermal conductivity (3D-woven,...). In some embodiments, the foldcores 24 are made tight by special treatments such as metallization. Further, titanium trapezes could be integrated into the foldcores 24.

Some embodiments of a method for manufacturing the foldcore sandwich element 22 for the aircraft structural component 14 comprise the steps:
a) providing the foldcore 24, 24.1, 24.2 for defining through channels 34, 36 for conducting a fluid such that the foldcore has folding lines where a flat fibre reinforced composite base material 42 is folded into the three-dimensional structure with ribs 38 and valleys 40 in zig-zag course, and
b) arranging the foldcore 24, 24.1, 24.2 between first and second plates 26, 26.i, 28 made of fibre reinforced composite material and fixing the plates 26, 26.i, 28 to the foldcore 24, 24.1, 24.2.

In the method, step a comprises
a1) providing the second through channels 36 for conducting a second fluid by indentations 46 in peak regions or valley regions of the foldcore 24.

In some embodiments, step a) comprises at least one or several of the following steps:
a2) providing the first foldcore 24.1 and the second foldcore 24.2;
a3) stacking the first and second foldcores 24.1, 24.2 together so that second channels for conducting a second fluid are defined between the first and second foldcore; especially, the stacking is conducted such, that the foldcores are largely in contact with each other to enhance the structural integrity, and only in limited regions, especially peak and bottom regions 44, 46, the second channels 36 are provided;
a4) providing separate second channels 36 within ribs 38 of the foldcore 24; a5) choosing the fibre reinforced composite material from the group consisting of CFRP, CFRP hybrid material, CFRP and metal hybrid material, CFRP post reinforced material, fibre reinforced composite material with metallized fibres, fibre reinforced composite material with pitch fibres, fibre reinforced composite material with metal fibres, fibre reinforced composite material with graphene, fibre reinforced composite material with graphite, SiC composite material, fibre reinforced composite material with metal components, fibre reinforced composite material with metallized surface, fibre reinforced composite material with a pyrolytic graphite sheet (PGS);
a6) applying a material (such as PGS) with a higher thermal conductivity as the fibre reinforced composite material on the surface or in cavities of the base material 42 or on the surface of the foldcore 24;
a7) filling porous cavities of the fibre reinforced material with a material with a higher thermal conductivity;
a8) providing porous cavities 52 acting as heat channels.

In some embodiments, step b) comprises at least one or several of the steps:
b1) repeating step a) in order to provide first and second foldcores 24, 24.1, 24.2 and arranging the first and second foldcores with an intermediate plate 26.i therebetween;
b2) roughening or grinding contact points or contact regions between the foldcore 24 and the first and/or second plate 26, 28, 26.i;
b3) fixing the foldcore 24 by an adhesive,
b4) repeating step a) in order to provide first and second foldcores 24.1, 24.2 and arranging the first and second foldcores with an intermediate plate therebetween so that channels34, 36 defined by the first and second foldcores 24.1, 24.2 run with main direction components perpendicular to each other.

In order to enable influencing the temperature of an aircraft system with enlarged functionality while saving weight, the invention provides an aircraft structural component (14) comprising a load bearing foldcore sandwich element (22), e.g., made of a metal, a ceramic or a fibre reinforced composite material or hybrid materials, wherein the foldcore sandwich element (22) comprises a foldcore (24, 24.1, 24.2), e.g., of metal, of ceramics or of fibre reinforced composite material, fixed between a first and second plate (26, 26.i, 28) and is configured as a heat exchanger (16) including a first fluid conduct (30) for conducting a first fluid through the sandwich element (22) and a second fluid conduct (32) for conducting a second fluid through the sandwich element (22) wherein at least the first fluid conduct (30) comprises channels (34) defined by the foldcore (24, 24.1, 24.2). The foldcore (24, 24.1, 24.2) is comprised of a flat base material (42) folded at first meandering fold lines (60) and second meandering fold lines (62), the first fold lines crossing the second fold lines, so that the channels (34, 36) have a zigzag form. Peaks and/or valley regions of the foldcore (24) have indentations in order to provide through channels (36) for conducting the second fluid.

### Reference sign list:

- 10: electrical system
- 12: cooling system
- 14: aircraft structural component
- 16: heat exchanger
- 20: electrical component
- 22: foldcore sandwich element
- 24: foldcore
- 24.1: first foldcores
- 24.2: second foldcore
- 26: first plate
- 26.i: intermediate plate
- 28: second plate
- 30: first fluid conduct
- 32: second fluid conduct
- 34: first channels
- 36: second channels
- 38: rib
- 40: valley
- 42: base material
- 44: peak regions
- 46: bottom regions
- 48: indentation
- 50: thermally conductive material
- 52: porous cavity
- 54: cool medium stream (e.g. condensed liquid)
- 56: hot medium stream (e.g. hot vapour)
- 60: first foldline
- 62: second foldline
- 100: aircraft
- 110: fuselage
- 120: wing
- 150: propulsion system
- a: angle at first fold lines
- b: angle at second fold lines

## Claims

1. Aircraft structural component (14) comprising a load bearing foldcore sandwich element (22), wherein the foldcore sandwich element (22) comprises at least one foldcore (24, 24.1, 24.2) fixed between a first and second plate (26, 26.i, 28) and is configured as a heat exchanger (16) including a first fluid conduct (30) for conducting a first fluid through the sandwich element (22) and a second fluid conduct (32) for conducting a second fluid through the sandwich element (22), wherein the foldcore (24, 24.1, 24.2) is comprised of a flat base material (42) folded at first meandering fold lines and second meandering fold lines, the first fold lines crossing the second fold lines, wherein at least the first fluid conduct (30) comprises meandering channels (34) defined by the foldcore (24, 24.1, 24.2), wherein the first fluid conduct (30) comprises first channels (34) running through the foldcore sandwich element (22) and the second fluid conduct comprises (32) second channels (36) running through the foldcore sandwich element (22), **characterized in that** at least some of the second channels (36) are defined by an indentation in peak regions or valley regions of the foldcore (24, 24.1, 24.2).

2. Aircraft structural component (14) according to claim 1, wherein
2.1 the foldcore sandwich element (22) comprises a first foldcore (24, 24.1) and a second foldcore (24, 24.2) and/or
2.2 wherein at least one or both of the first and second plates are made from the same material as the base material or from a material different to the base material.

3. Aircraft structural component (14) according to any of the preceding claims, wherein the first and second channels (24, 26) have at least one or several of the following features:
3.1 at least some the first and second channels (34, 36) run with their main direction component parallel to each other,
3.2 at least some of the first and second channels (34, 36) run with their main direction component perpendicular to each other,
3.3 at least some of the second channels (35) are defined between first and second foldcores (24,1. 24,2) stacked into each other,
3.4 at least some of the first and second channels (34, 36) are separated from each other by an intermediate plate (26.i) of the foldcore sandwich element (22),
3.5 at least some of the second channels (35) are defined between first and second foldcores (24,1. 24,2) stacked into each other such that wall regions of ribs and valleys are in contact with each other, and the second channels (36) are defined in a limited regions between peaks and bottom parts of the first and second foldcores (24.1, 24.2),
3.6 both the first and second channels (34, 36) run in a zigzag course or in a meandring way through the sandwich element (22).

4. Aircraft structural component (14) according to any of the preceding claims, wherein the base material (42) and/or the material of the first and/or the second plate is chosen from the group consisting of fibre reinforced composite material, metal, pure metal, metal alloy, aluminium including an aluminium alloy, titanium, ceramic, CFRP, CFRP hybrid material, CFRP and metal hybrid material, CFRP post reinforced material, fibre reinforced composite material with metallized fibres, fibre reinforced composite material with pitch fibres, fibre reinforced composite material with metal fibres, fibre reinforced composite material with graphene, fibre reinforced composite material with graphite, SiC composite material, fibre reinforced composite material with metal components, fibre reinforced composite material with metallized surface, fibre reinforced composite material with a pyrolytic graphite sheet, and fibre reinforced composite material with a thermally conductive graphite sheet, and combinations of one or several of the aforementioned materials, especially in layers, as composite or hybrid material.

5. Aircraft structural component (14) according to any of the preceding claims, wherein at least a part of the foldcore (24) and/or the first and/or second plate (26, 28) and/or an intermediate plate (26.i) of the foldcore sandwich element (22) is configured as a separation wall between the first and second fluid conduits (30, 32), is made from a fibre reinforced composite material, and comprises at least one of a porous cavity acting as a heat pipe, a metal, graphite, and graphene integrated in the fibre reinforced composite material or at least one of a metal, graphite, and graphene integrated in porous cavities therein.

6. Aircraft structural component (14) according to any of the preceding claims, wherein second channels (36) of the second fluid conduct (32) include 3D-printed channels and/or metal channels combined within the foldcore.

7. Aircraft structural component (14) according to any of the preceding claims, wherein first channels (34) of the first conduct (30) are defined between ribs (38) of the foldcore (24) and second channels (36) of the second conduct (32), preferably running with a main direction component in parallel to the first channels (34), are arranged in peak regions (44) of the ribs (38) and/or in bottom regions (46) of valleys (40) of the foldcore (24).

8. Aircraft structural component (14) according to any of the preceding claims, wherein contact points or contact regions between the foldcore (24) and the first and/or the second plates (26, 26.i, 28) comprise at least one of a welding, a solder connection, an adhesive, a composite-material connection having broken fibres, treated surfaces, roughened surfaces and a composite-material connection with surfaces grinded to the fibres.

9. Aircraft structural component (14) according to any of the preceding claims, chosen from the group consisting of a fuselage component, wing component, tail component, a post, a wall component, a floor component, and a support component.

10. Aircraft (100), comprising a structural component (14) according to any of the preceding claims.

11. Aircraft (100) according to claim 10, further comprising at least one fuel cell arranged to be cooled by means of the heat exchanger (16) constituted by the foldcore sandwich element (22).

12. Method for manufacturing the foldcore sandwich element (22) for the aircraft structural component (14) according to any of the claims 1 to 9, comprising:
a) providing a foldcore (24, 24.1, 24.2) for defining through channels (34, 36) for conducting a fluid such that the foldcore has fold lines where a flat base material (42) is folded into a three-dimensional structure, wherein the fold lines include first meandering fold lines and second meandering fold lines, the first fold lines crossing the second fold lines, and
b) arranging the foldcore (24, 24.1, 24.2) between first and second plates and fixing the plates to the foldcore,
**characterized in that** step a) comprises the step
a1) providing second through channels (36) for conducting a second fluid by indentations (52) in in peak regions or valley regions of the foldcore (24).

13. Method according to claim 12, wherein step a) comprises at least one or several of the following steps:
a2) providing a first foldcore (24.1) and a second foldcore (24.2);
a3) stacking a first and a second foldcore (24.1, 24.2) together so that second channels (36) for conducting a second fluid are defined, preferably in a limited partial region (44, 46), between the first and second foldcores (24.1, 24. 2);
a4) providing separate second channels (36) within ribs (38) of the foldcore (24);
a5) choosing the base material (42) and/or the material of at least one or both of the first and second plates from the group consisting of fibre reinforced composite material, metal, pure metal, metal alloy, aluminium including an aluminium alloy, titanium, ceramic, CFRP, CFRP hybrid material, CFRP and metal hybrid material, CFRP post reinforced material, fibre reinforced composite material with metallized fibres, fibre reinforced composite material with pitch fibres, fibre reinforced composite material with metal fibres, fibre reinforced composite material with graphene, fibre reinforced composite material with graphite, SiC composite material, fibre reinforced composite material with metal components, fibre reinforced composite material with metallized surface, fibre reinforced composite material with a pyrolytic graphite sheet; fibre reinforced composite material with a thermally conductive graphite sheet and combinations of one or several of the aforementioned materials, especially in layers, as composite or hybrid material;
a6) applying a material with a higher thermal conductivity as the base material on the surface of the base material (42) or on the surface of the foldcore;
a7) filling porous cavities of the base material (42) with a material with a higher thermal conductivity;
a8) providing porous cavities (52) acting as heat pipes.

14. Method according to any of the claims 12 or 13, wherein step b) comprises at least one or several of the steps:
b1) repeating step a) in order to provide first and second foldcores (24.1, 24.2) and arranging the first and second foldcores with or without an intermediate plate (26.i) therebetween;
b2) roughening or grinding contact points or contact regions between the foldcore and the first and/or second plate;
b3) fixing the foldcore by welding, soldering, or bonding, especially adhesively bonding,
b4) repeating step a) in order to provide first and second foldcores and arranging the first and second foldcores, preferably with an intermediate plate (26.i) therebetween, so that channels (34, 36) defined by the first and second foldcores (24.1, 24.2) run with main direction components perpendicular to each other.

## Patentansprüche

1. Flugzeugstrukturbauteil (14), umfassend ein lasttragendes Faltkern-Sandwichelement (22), wobei das Faltkern-Sandwichelement (22) mindestens einen Faltkern (24, 24.1, 24.2) umfasst, der zwischen einer ersten und einer zweiten Platte (26, 26.i, 28) fixiert ist und als Wärmetauscher (16) ausgelegt ist, der eine erste Fluidleitung (30) zum Leiten eines ersten Fluids durch das Sandwichelement (22) und eine zweite Fluidleitung (32) zum Leiten eines zweiten Fluids durch das Sandwichelement (22) umfasst, wobei der Faltkern (24, 24.1, 24.2) aus einem flachen Basismaterial (42) besteht, das an ersten mäanderförmigen Faltlinien und zweiten mäanderförmigen Faltlinien gefaltet ist, wobei die ersten Faltlinien die zweiten Faltlinien kreuzen, wobei zumindest die erste Fluidleitung (30) mäanderförmige Kanäle (34) umfasst, die durch den Faltkern (24, 24.1, 24.2) definiert sind, wobei die erste Fluidleitung (30) erste Kanäle (34) umfasst, die durch das Faltkern-Sandwichelement (22) verlaufen, und die zweite Fluidleitung (32) zweite Kanäle (36) umfasst, die durch das Faltkern-Sandwichelement (22) verlaufen, **dadurch gekennzeichnet, dass** zumindest einige der zweiten Kanäle (36) durch eine Vertiefung in Spitzenbereichen oder Talbereichen des Faltkerns (24, 24.1, 24.2) definiert sind.

2. Flugzeugstrukturbauteil (14) nach Anspruch 1, wobei
2.1 das Faltkern-Sandwichelement (22) einen ersten Faltkern (24, 24.1) und einen zweiten Faltkern (24, 24.2) umfasst und/oder
2.2 die erste und/oder die zweite Platte aus dem gleichen Material wie das Basismaterial oder aus einem Material, das sich vom Basismaterial unterscheidet, hergestellt sind.

3. Flugzeugstrukturbauteil (14) nach einem der vorhergehenden Ansprüche, wobei der erste und zweite Kanal (24, 26) mindestens eines oder mehrere der folgenden Merkmale aufweisen:
3.1 mindestens einige der ersten und zweiten Kanäle (34, 36) verlaufen mit ihrem Hauptrichtungsbauteil parallel zueinander,
3.2 mindestens einige der ersten und zweiten Kanäle (34, 36) verlaufen mit ihrem Hauptrichtungsbauteil senkrecht zueinander,
3.3 mindestens einige der zweiten Kanäle (35) sind zwischen einem ineinander gestapelten ersten und zweiten Faltkern (24,1. 24,2) definiert,
3.4 mindestens einige der ersten und zweiten Kanäle (34, 36) sind durch eine Zwischenplatte (26.i) des Faltkern-Sandwichelements (22) voneinander getrennt,
3.5 mindestens einige der zweiten Kanäle (35) sind zwischen einem ineinander gestapelten ersten und zweiten Faltkern (24,1. 24,2) definiert, so dass Wandbereiche von Rippen und Tälern miteinander in Kontakt stehen, und die zweiten Kanäle (36) sind in begrenzten Bereichen zwischen Spitzen und Unterteilen des ersten und zweiten Faltkerns (24.1, 24.2) definiert;
3.6 sowohl die ersten als auch zweiten Kanäle (34, 36) verlaufen zickzackförmig oder mäanderförmig durch das Sandwichelement (22).

4. Flugzeugstrukturbauteil (14) nach einem der vorhergehenden Ansprüche, wobei das Basismaterial (42) und/oder das Material der ersten und/oder zweiten Platte ausgewählt ist aus der Gruppe bestehend aus faserverstärktem Verbundmaterial, Metall, Reinmetall, einer Metalllegierung, Aluminium einschließlich einer Aluminiumlegierung, Titan, Keramik, CFK, CFK-Hybridmaterial, CFK- und Metallhybridmaterial, CFK-nachverstärktem Material, faserverstärktem Verbundmaterial mit metallisierten Fasern, faserverstärktem Verbundmaterial mit Pechfasern, faserverstärktem Verbundmaterial mit Metallfasern, faserverstärktem Verbundmaterial mit Graphen, faserverstärktem Verbundmaterial mit Graphit, SiC-Verbundmaterial, faserverstärktem Verbundmaterial mit Metallkomponenten, faserverstärktem Verbundmaterial mit metallisierter Oberfläche, faserverstärktem Verbundmaterial mit einer pyrolytischen Graphitfolie und faserverstärktem Verbundmaterial mit einer wärmeleitfähigen Graphitfolie und Kombinationen aus einem oder mehreren der vorgenannten Materialien, insbesondere in Schichten, als Verbund- oder Hybridmaterial.

5. Flugzeugstrukturbauteil (14) nach einem der vorhergehenden Ansprüche, wobei zumindest ein Teil des Faltkerns (24) und/oder der ersten und/oder zweiten Platte (26, 28) und/oder einer Zwischenplatte (26.i) des Faltkern-Sandwichelements (22) als Trennwand zwischen der ersten und zweiten Fluidleitung (30, 32) ausgelegt ist, aus einem faserverstärkten Verbundmaterial hergestellt ist und einen als Wärmerohr wirkenden porösen Hohlraum, ein in das faserverstärkte Verbundmaterial integriertes Metall, Graphit und Graphen und/oder ein in poröse Hohlräume darin integriertes Metall, Graphit und Graphen umfasst.

6. Flugzeugstrukturbauteil (14) nach einem der vorhergehenden Ansprüche, wobei zweite Kanäle (36) der zweiten Fluidleitung (32) 3D-gedruckte Kanäle und/oder Metallkanäle beinhalten, die innerhalb des Faltkerns kombiniert sind.

7. Flugzeugstrukturbauteil (14) nach einem der vorhergehenden Ansprüche, wobei erste Kanäle (34) der ersten Leitung (30) zwischen Rippen (38) des Faltkerns (24) definiert sind und zweite Kanäle (36) der zweiten Leitung (32), die vorzugsweise mit einem Hauptrichtungsbauteil parallel zu den ersten Kanälen (34) verlaufen, in Spitzenbereichen (44) der Rippen (38) und/oder in Bodenbereichen (46) der Täler (40) des Faltkerns (24) angeordnet sind.

8. Flugzeugstrukturbauteil (14) nach einem der vorhergehenden Ansprüche, wobei Kontaktpunkte oder Kontaktbereiche zwischen dem Faltkern (24) und der ersten und/oder zweiten Platte (26, 26.i, 28) eine Schweißung, eine Lötverbindung, einen Klebstoff, eine Verbundmaterialverbindung mit gebrochenen Fasern, behandelte Oberflächen, aufgeraute Oberflächen und/oder eine Verbundmaterialverbindung mit bis auf die Fasern geschliffenen Oberflächen umfassen.

9. Flugzeugstrukturbauteil (14) nach einem der vorhergehenden Ansprüche, ausgewählt aus der Gruppe bestehend aus einem Rumpfbauteil, Flügelbauteil, Heckbauteil, einem Pfosten, einem Wandbauteil, einem Bodenbauteil und einem Stützbauteil.

10. Flugzeug (100), umfassend ein Strukturbauteil (14) nach einem der vorhergehenden Ansprüche.

11. Flugzeug (100) nach Anspruch 10, ferner umfassend mindestens eine Brennstoffzelle, die dazu angeordnet ist, mittels des Wärmetauschers (16) gekühlt zu werden, der aus dem Faltkern-Sandwichelement (22) besteht.

12. Verfahren zum Herstellen des Faltkern-Sandwichelements (22) für das Flugzeugstrukturbauteil (14) nach einem der Ansprüche 1 bis 9, umfassend:
a) Vorsehen eines Faltkerns (24, 24.1, 24.2) zum Definieren von Durchgangskanälen (34, 36) zum Leiten eines Fluids, so dass der Faltkern Faltlinien aufweist, an denen ein flaches Basismaterial (42) in eine dreidimensionale Struktur gefaltet wird, wobei die Faltlinien erste mäanderförmige Faltlinien und zweite mäanderförmige Faltlinien beinhalten, wobei die ersten Faltlinien die zweiten Faltlinien kreuzen, und
b) Anordnen des Faltkerns (24, 24.1, 24.2) zwischen einer ersten und einer zweiten Platte und Fixieren der Platten am Faltkern,
**dadurch gekennzeichnet, dass** Schritt a) den folgenden Schritt umfasst
a1) Vorsehen zweiter Durchgangskanäle (36) zum Leiten eines zweiten Fluids durch Vertiefungen (52) in Spitzenbereichen oder Talbereichen des Faltkerns (24).

13. Verfahren nach Anspruch 12, wobei Schritt a) mindestens einen oder mehrere der folgenden Schritte umfasst:
a2) Vorsehen eines ersten Faltkerns (24.1) und eines zweiten Faltkerns (24.2),
a3) Stapeln eines ersten und zweiten Faltkerns (24.1, 24.2) aufeinander, so dass zweite Kanäle (36) zum Leiten eines zweiten Fluids, vorzugsweise in einem begrenzten Teilbereich (44, 46), zwischen dem ersten und zweiten Faltkern (24.1, 24.2) definiert werden;
a4) Vorsehen getrennter zweiter Kanäle (36) innerhalb der Rippen (38) des Faltkerns (24);
a5) Auswählen des Basismaterials (42) und/oder des Materials der ersten und/oder zweiten Platte aus der Gruppe bestehend aus faserverstärktem Verbundmaterial, Metall, Reinmetall, einer Metalllegierung, Aluminium einschließlich einer Aluminiumlegierung, Titan, Keramik, CFK, CFK-Hybridmaterial, CFK- und Metallhybridmaterial, CFK-nachverstärktem Material, faserverstärktem Verbundmaterial mit metallisierten Fasern, faserverstärktem Verbundmaterial mit Pechfasern, faserverstärktem Verbundmaterial mit Metallfasern, faserverstärktem Verbundmaterial mit Graphen, faserverstärktem Verbundmaterial mit Graphit, SiC-Verbundmaterial, faserverstärktem Verbundmaterial mit Metallkomponenten, faserverstärktem Verbundmaterial mit metallisierter Oberfläche, faserverstärktem Verbundmaterial mit einer pyrolytischen Graphitfolie; faserverstärktem Verbundmaterial mit einer wärmeleitfähigen Graphitfolie und Kombinationen aus einem oder mehreren der vorgenannten Materialien, insbesondere in Schichten, als Verbund- oder Hybridmaterial;
a6) Aufbringen eines Materials mit einer höheren Wärmeleitfähigkeit als das Basismaterial auf die Oberfläche des Basismaterials (42) oder auf die Oberfläche des Faltkerns;
a7) Füllen poröser Hohlräume des Basismaterials (42) mit einem Material mit einer höheren Wärmeleitfähigkeit;
a8) Vorsehen poröser Hohlräume (52), die als Wärmerohre wirken.

14. Verfahren nach einem der Ansprüche 12 oder 13, wobei Schritt b) mindestens einen oder mehrere der folgenden Schritte umfasst:
b1) Wiederholen von Schritt a), um einen ersten und zweiten Faltkern (24.1, 24.2) vorzusehen, und Anordnen des ersten und zweiten Faltkerns mit oder ohne Zwischenplatte (26.i) dazwischen;
b2) Aufrauen oder Schleifen von Kontaktpunkten oder Kontaktbereichen zwischen dem Faltkern und der ersten und/oder zweiten Platte;
b3) Fixieren des Faltkerns durch Schweißen, Löten oder Fügen, insbesondere Verkleben,
b4) Wiederholen von Schritt a), um einen ersten und zweiten Faltkern vorzusehen, und Anordnen des ersten und zweiten Faltkerns, vorzugsweise mit einer Zwischenplatte (26.i) dazwischen, so dass durch den ersten und zweiten Faltkern (24.1, 24.2) definierte Kanäle (34, 36) mit Hauptrichtungsbauteilen senkrecht zueinander verlaufen.

## Revendications

1. Composant structurel d'aéronef (14) comprenant un élément sandwich à âme pliée porteur (22), l'élément sandwich à âme pliée (22) comprenant au moins une âme pliée (24, 24.1, 24.2) fixée entre des première et seconde plaques (26, 26.i, 28) et étant conçu comme un échangeur de chaleur (16) comprenant un premier conduit de fluide (30) pour acheminer un premier fluide à travers l'élément sandwich (22) et un second conduit de fluide (32) pour acheminer un second fluide à travers l'élément sandwich (22), l'âme pliée (24, 24.1, 24.2) se composant d'un matériau de base plat (42) plié au niveau de premières lignes de pliage sinueuses et de secondes lignes de pliage sinueuses, les premières lignes de pliage croisant les secondes lignes de pliage, au moins le premier conduit de fluide (30) comprenant des canaux sinueux (34) définis par l'âme pliée (24, 24.1, 24.2), le premier conduit de fluide (30) comprenant des premiers canaux (34) s'étendant à travers l'élément sandwich à âme pliée (22) et le second conduit de fluide (32) comprenant des seconds canaux (36) s'étendant à travers l'élément sandwich à âme pliée (22), **caractérisé en ce qu'**au moins certains des seconds canaux (36) sont définis par un renfoncement dans des régions de crête ou des régions de creux de l'âme pliée (24, 24.1, 24.2).

2. Composant structurel d'aéronef (14) selon la revendication 1, dans lequel
2.1 l'élément sandwich à âme pliée (22) comprend une première âme pliée (24, 24.1) et une seconde âme pliée (24, 24.2) et/ou
2.2 dans lequel la première plaque et/ou la seconde plaque sont faites du même matériau que le matériau de base ou d'un matériau différent du matériau de base.

3. Composant structurel d'aéronef (14) selon l'une quelconque des revendications précédentes, dans lequel les premiers et seconds canaux (24, 26) possèdent au moins une ou plusieurs des caractéristiques suivantes :
3.1 au moins certains des premiers et seconds canaux (34, 36) s'étendent avec leurs composantes de direction principales parallèles entre elles,
3.2 au moins certains des premiers et seconds canaux (34, 36) s'étendent avec leurs composantes de direction principales perpendiculaires entre elles,
3.3 au moins certains des seconds canaux (35) sont définis entre des première et seconde âmes pliées (24.1, 24.2) empilées l'une dans l'autre,
3.4 au moins certains des premiers et seconds canaux (34, 36) sont séparés les uns des autres par une plaque intermédiaire (26.i) de l'élément sandwich à âme pliée (22),
3.5 au moins certains des seconds canaux (35) sont définis entre des première et seconde âmes pliées (24.1, 24.2) empilées l'une dans l'autre de sorte que des régions de paroi des nervures et des creux soient en contact les unes avec les autres, et les seconds canaux (36) sont définis dans des régions limitées entre des crêtes et des parties de fond des première et seconde âmes pliées (24.1, 24.2) ;
3.6 les premiers et seconds canaux (34, 36) s'étendent en zigzag ou de façon sinueuse à travers l'élément sandwich (22).

4. Composant structurel d'aéronef (14) selon l'une quelconque des revendications précédentes, dans lequel le matériau de base (42) et/ou le matériau de la première et/ou de la seconde plaque sont choisis dans le groupe constitué par un matériau composite renforcé par des fibres, un métal, un métal pur, un alliage de métal, l'aluminium y compris un alliage d'aluminium, le titane, une céramique, un plastique renforcé par des fibres de carbone, un matériau hybride de plastique renforcé par des fibres de carbone, un matériau hybride de métal et de plastique renforcé par des fibres de carbone, un matériau postérieurement renforcé de plastique renforcé par des fibres de carbone, un matériau composite renforcé par des fibres avec des fibres métallisées, un matériau composite renforcé par des fibres avec des fibres de brai, un matériau composite renforcé par des fibres avec des fibres métalliques, un matériau composite renforcé par des fibres avec du graphène, un matériau composite renforcé par des fibres avec du graphite, un matériau composite de SiC, un matériau composite renforcé par des fibres avec des composants métalliques, un matériau composite renforcé par des fibres avec une surface métallisée, un matériau composite renforcé par des fibres avec une feuille de graphite pyrolytique, et un matériau composite renforcé par des fibres avec une feuille de graphite thermoconductrice, et des combinaisons d'un ou de plusieurs des matériaux précités, notamment en couches, sous forme de matériau composite ou hybride.

5. Composant structurel d'aéronef (14) selon l'une quelconque des revendications précédentes, dans lequel au moins une partie de l'âme pliée (24) et/ou de la première et/ou de la seconde plaque (26, 28) et/ou d'une plaque intermédiaire (26.i) de l'élément sandwich à âme pliée (22) est conçue comme une paroi de séparation entre les premier et second conduits de fluide (30, 32), est faite d'un matériau composite renforcé par des fibres, et comprend au moins élément parmi une cavité poreuse constituant un caloduc, un métal, du graphite et du graphène intégré dans le matériau composite renforcé par des fibres ou au moins un élément parmi un métal, du graphite et du graphène intégré dans des cavités poreuses dans celle-ci.

6. Composant structurel d'aéronef (14) selon l'une quelconque des revendications précédentes, dans lequel les seconds canaux (36) du second conduit de fluide (32) comprennent des canaux imprimés en 3D et/ou des canaux métalliques combinés à l'intérieur de l'âme pliée.

7. Composant structurel d'aéronef (14) selon l'une quelconque des revendications précédentes, dans lequel des premiers canaux (34) du premier conduit (30) sont définis entre des nervures (38) de l'âme pliée (24) et des seconds canaux (36) du second conduit (32), s'étendant de préférence avec une composante de direction principale parallèlement aux premiers canaux (34), se situent dans des régions de crête (44) des nervures (38) et/ou dans des régions de fond (46) des creux (40) de l'âme pliée (24).

8. Composant structurel d'aéronef (14) selon l'une quelconque des revendications précédentes, dans lequel les points de contact ou les zones de contact entre l'âme pliée (24) et la première et/ou la seconde plaque (26, 26.i, 28) comprennent une soudure, une liaison brasée, un adhésif, une liaison en matériau composite avec des fibres rompues, des surfaces traitées, des surfaces rugosifiées et/ou une liaison en matériau composite avec des surfaces meulées jusqu'aux fibres.

9. Composant structurel d'aéronef (14) selon l'une quelconque des revendications précédentes, choisi dans le groupe constitué par un composant de fuselage, un composant de voilure, un composant d'empennage, un montant, un composant de paroi, un composant de plancher et un composant de support.

10. Aéronef (100) comprenant un composant structurel (14) selon l'une quelconque des revendications précédentes.

11. Aéronef (100) selon la revendication 10, comprenant en outre au moins une pile à combustible conçue pour être refroidie au moyen de l'échangeur de chaleur (16) constitué par l'élément sandwich à âme pliée (22).

12. Procédé de fabrication de l'élément sandwich à âme pliée (22) pour le composant structurel d'aéronef (14) selon l'une quelconque des revendications 1 à 9, comprenant :
a) préparer une âme pliée (24, 24.1, 24.2) de façon à définir des canaux traversants (34, 36) pour acheminer un fluide de sorte que l'âme pliée présente des lignes de pliage où un matériau de base plat (42) est plié en une structure tridimensionnelle, les lignes de pliage comprenant des premières lignes de pliage sinueuses et des secondes lignes de pliage sinueuses, les premières lignes de pliage croisant les secondes lignes de pliage, et
b) placer l'âme pliée (24, 24.1, 24.2) entre des première et seconde plaques et fixer les plaques à l'âme pliée,
**caractérisé en ce que** l'étape a) comprend l'étape suivante :
a1) définir des seconds canaux traversants (36) pour acheminer un second fluide par le biais de renfoncements (52) dans des régions de crête ou des régions de creux de l'âme pliée (24).

13. Procédé selon la revendication 12, dans lequel l'étape a) comprenant au moins une ou plusieurs des étapes suivantes :
a2) préparer une première âme pliée (24.1) et une seconde âme pliée (24.2) ;
a3) empiler des première et seconde âmes pliées (24.1, 24.2) ensemble de sorte que des seconds canaux (36) pour acheminer un second fluide soient définis, de préférence dans une région partielle limitée (44, 46), entre les première et seconde âmes pliées (24.1, 24. 2) ;
a4) définir des seconds canaux (36) séparés à l'intérieur de nervures (38) de l'âme pliée (24) ;
a5) choisir le matériau de base (42) et/ou le matériau de la première et/ou de la seconde plaque dans le groupe constitué par un matériau composite renforcé par des fibres, un métal, un métal pur, un alliage de métal, l'aluminium y compris un alliage d'aluminium, le titane, une céramique, un plastique renforcé par des fibres de carbone, un matériau hybride de plastique renforcé par des fibres de carbone, un matériau hybride de métal et de plastique renforcé par des fibres de carbone, un matériau postérieurement renforcé de plastique renforcé par des fibres de carbone, un matériau composite renforcé par des fibres avec des fibres métallisées, un matériau composite renforcé par des fibres avec des fibres de brai, un matériau composite renforcé par des fibres avec des fibres métalliques, un matériau composite renforcé par des fibres avec du graphène, un matériau composite renforcé par des fibres avec du graphite, un matériau composite de SiC, un matériau composite renforcé par des fibres avec des composants métalliques, un matériau composite renforcé par des fibres avec une surface métallisée, un matériau composite renforcé par des fibres avec une feuille de graphite pyrolytique ; un matériau composite renforcé par des fibres avec une feuille de graphite thermoconductrice, et des combinaisons d'un ou de plusieurs des matériaux précités, notamment en couches, sous forme de matériau composite ou hybride ;
a6) appliquer un matériau à conductivité thermique plus élevée comme matériau de base à la surface du matériau de base (42) ou à la surface de l'âme pliée ;
a7) remplir des cavités poreuses du matériau de base (42) avec un matériau à conductivité thermique plus élevée ;
a8) définir des cavités poreuses (52) constituant des caloducs.

14. Procédé selon l'une ou l'autre des revendications 12 et 13, dans lequel l'étape b) comprend au moins une ou plusieurs des étapes suivantes :
b1) répéter l'étape a) pour préparer des première et seconde âmes pliées (24.1, 24.2) et disposer les première et seconde âmes pliées avec ou sans plaque intermédiaire (26.i) entre elles ;
b2) rugosifier ou meuler des points de contact ou des zones de contact entre l'âme pliée et la première et/ou la seconde plaque ;
b3) fixer l'âme pliée par soudure, brasure, ou fixation par liant, notamment fixation par adhésif,
b4) répéter l'étape a) pour préparer des première et seconde âmes pliées et disposer les première et seconde âmes pliées, de préférence avec une plaque intermédiaire (26.i) entre elles, de sorte que des canaux (34, 36) définis par les première et seconde âmes pliées (24.1, 24.2) s'étendent avec des composantes de direction principales perpendiculaires entre elles.
